# EUROPEAN PATENT SPECIFICATION

(11) **EP 2 604 128 B1**
(45) Date of publication and mention of the grant of the patent: **02.04.2014**
(21) Application number: 11193693.6
(22) Date of filing: 15.12.2011
(51) Int. Cl.: A23L 3/3436, A23L 3/3418, B65D 81/26

(54) **Packaging method and packaging comprising a closed oxygen-scavenging container containing an oxygen-sensitive substance**
Verpackungsverfahren und Verpackung mit einem geschlossenen Sauerstofffänger-Behälter enthaltend eine Sauerstoff-sensitive Substanz
Procédé d'emballage et emballage comportant un récipient désoxygénant contenant une substance sensible à l'oxygène

(43) Date of publication of application: 19.06.2013
(73) Proprietor: La Seda de Barcelona S.A., 08820 Barcelona (ES)
(72) Inventor: Hermans, An, 2310 Rijkevorsel (BE)
(74) Representative: Matkowska, Franck

(56) References cited:
- DE-A1-102005 055 632
- US-A- 3 437 427

## Description

### Technical Field

The invention relates to a novel packaging comprising a closed oxygen-scavenging container containing an oxygen-sensitive substance that can be altered by oxygen, and to a packaging method for obtaining this novel packaging. The oxygen-sensitive substance can be more particularly, but not only, a food substance or a beverage such as for example juice, beer, wine, a medical product...

### Prior Art

The shelf-life of an oxygen-sensitive substance, like for example food substance or beverage, contained in a container can be detrimentally shortened by the presence of oxygen inside the container.

In order to increase the shelf-life of an oxygen-sensitive substance in a container, it is usual to flush the container containing the substance with an inert de-oxygenating gas, and more especially with nitrogen and/or carbon dioxide, in such a way to remove and replace the oxygen initially contained in the container by a volume of said inert gas.

Such a packaging method can eventually be practised with containers that are not permeable to molecular oxygen, like for example airtightly closed glass containers, but are not sufficiently efficient for containers that are permeable to molecular oxygen, such as for example plastic containers, and in particular PET(polyethylene terephtalate) containers. With containers that are permeable to oxygen, the oxygen-sensitive substance is detrimentally oxidized by the molecular oxygen that comes from the outside of the container and that penetrates inside the container.

For solving this problem, it has already been proposed to add a catalyst inside the container for promoting a reaction between molecular hydrogen and molecular oxygen inside the container, and to flush the container containing the oxygen-sensitive substance with a mixture of an inert gas like nitrogen and/or carbon dioxide with a small volume of molecular hydrogen. The oxygen inside the container is scavenged by the molecular hydrogen that reacts with the oxygen for producing water. Such a solution is disclosed for example in publication GB 1 188 170, wherein the catalyst is a redox catalyst and the container is flushed for example with a gas containing 95% N₂ and 5% H₂, or in PCT application WO 99/05922 wherein the catalyst is a platinum group metal and the container is flushed with a mixture of inert gas and 3% H₂.

One skilled in the art in the field of packaging knows that a flammability limit of molecular hydrogen in air in ambient condition is 4% H₂ by volume, and that above this limit of 4%H₂, the gas mixture containing H₂ becomes flammable in ambient condition. Consequently, up to date, one skilled in the art in the field of packaging has always considered that when a mixture of inert gas, like nitrogen, and hydrogen is flushed inside a container, for safety reasons the volume of H₂ in the gas mixture has to be very low, typically not more than 5.5%H₂, in order to be sure that the gas mixture in the container is always below this flammability limit.

But one drawback of practising low volume of H₂ is that the molecular H₂ is very quickly consumed in the reaction with oxygen inside the container and that the shelf-life of the oxygen-sensitive substance is actually not strongly increased.

Another solution to increase the shelf-life of a packaged oxygen-sensitive substance is to use containers having high gas barrier properties, in particular oxygen and/or carbon dioxide barrier properties. In particular, it is now common to use multilayered plastic containers, that include at least one gas barrier layer. For example, in the field of bottle packaging, a typical and common multilayered wall structure for a hollow rigid container is a three-layer wall: two internal and external layers made of PET, and one intermediate gas barrier layer sandwiched between the two PET layers.

A first known type of barrier layer is made of, or comprises, polymers that have excellent gas-barrier properties, in particular to O₂ and/or CO₂, and is generally referred as "passive barrier layer". Among the polymers used for making passive barrier layers, homo- or copolymers of polyamides are commonly used. Among these polyamides, the so-called "MXD6" or "MXD6 nylon" (specific polyamide material manufactured by Mitsubishi Gas Chemical Company, Japan) is preferably used, i.e. a poly(m-xylyleneadipamide) produced by the polycondensation of a diamine component composed mainly of m-xylylenediamine and a dicarboxylic acid component composed mainly of adipic acid.

A second known type of barrier layer, which has been more recently developed, is made of, or comprises, polymeric composition that has oxygen-scavenging properties, and is generally referred as "active barrier layer". Generally speaking, an active barrier layer reacts with the oxygen and "captures" the oxygen when the oxygen penetrates into the layer. Such active barrier layer is thus progressively "consumed" in use.

Examples of polymeric compositions used for making active barrier layer are described notably in European patent application EP-A-0 301 719 or in European patent application EP-A-0 507 207. Said polymeric compositions generally comprise an oxidizable polymer and a transition metal catalyst. In EP-A-0 301 719, the preferred oxidizable polymers are polyamides, and especially MXD6. In EP-0 507 207, one preferred oxidizable polymer is polybutadiene. In both cases, preferred transition metal catalysts are transition metal salts, an in particular cobalt stearate. Other known metal salts used for making such composition are rhodium, manganese, copper, iron.

With multilayered containers having at least one gas barrier layer comprising a polyamide (e.g. MXD6) and a polyester (e.g. PET), very good results can be achieved in terms of shelf life of the packaged substance. More especially when the barrier layer comprises a polyamide (e.g. MXD6), polyester (e.g. PET), and a catalyst such as a cobalt salt, the multilayered container can be used for storing oxygen-sensitive products, such as beer, fruit juice, or the like. The shelf life of packaged product widely depends of the amount of polyamide in the packaging article and of the thickness of the barrier layer.

In return, the use of gas barrier polymer, like polyamide in the container wall renders the recycling of the container more difficult. In addition, when polyamide is used, in particular for making a monolayer container, there is a risk of formation of haze in the container wall due to the orientation of the polyamide during the process for making the container. Said haze formation in the container wall is obviously detrimental for all the applications where it is important to have a transparent container, - i.e. a container whose wall has no eye-visible whitening or haze, in order to have a better appearance of the packaged product.

In order to improve the O₂ scavenging performance of a plastic container, it is also known to close the container with a closure cap comprising a layer or liner having O₂ scavenging properties.

Another recent route for making a container having oxygen scavenging properties is described in PCT application WO 2008/090354. The O₂ scavenging properties are obtained by using an active substance, such as for example a hydride, that is capable of chemically reacting with water and generating molecular hydrogen in situ inside the container, and by making said molecular hydrogen react with oxygen which may ingress the container. This solution is interesting because only very small amount of H₂ is continuously generated in-situ inside the container and in contrast with the aforesaid solution of flushing a mixture of inert gas and hydrogen, the H₂ generation is achieved over a longer period which dramatically improves the shelf-life. One drawback of this solution is however the use of an additional active substance, such as for example a hydride, that can prejudicially contaminate the substance stored in the container.

### Objective of the invention

One objective of the invention is to propose a novel solution for packaging an oxygen-sensitive substance in a closed container with an increased shelf-life in comparison with the solution of the prior art wherein the oxygen initially contained in the container is removed by flushing a mixture of inert gas, like nitrogen, and not more than 5.5% of hydrogen.

### Summary of the invention

This objective is achieved by the novel method of claim 1, for packaging an oxygen-sensitive substance into a container, said method comprising the following steps :
- the oxygen-sensitive substance is introduced into the container,
- a de-oxygenating gas containing at least 75% of molecular hydrogen is introduced inside the container containing the oxygen-sensitive substance,
- the container containing the oxygen-sensitive substance and the de-oxygenating gas is hermetically closed with a closure,
and wherein a catalyst is used inside the container and/or in the container wall and/or in the closure for promoting a reaction between molecular hydrogen and molecular oxygen.

Another object of the invention is the packaging defined in claim 12. Said packaging comprises a closed container that is containing an oxygen-sensitive substance and a de-oxygenating gas containing at least from 75% of molecular hydrogen, and said packaging also comprising a catalyst inside the container and/or in the container wall and/or in the closure for promoting a reaction between molecular hydrogen and molecular oxygen.

It is the merit of the invention to have overcome the prejudice of the prior art to practice only very small volume of H₂ for safety reasons, and to have tried and demonstrated that very high level of H₂, i.e. at least 75% H₂, and preferably almost 100% H_{2,} could also be practiced without flammability risk in ambient condition, and with a strong increase of the shelf-life of the packaged substance.

The wording "container" used therein and in the claims means any container that can be used for storing a substance. Within the scope of the invention, the container can be a rigid container, like for example a rigid bottle, a jar, a rigid vessel, a rigid flask, a rigid tube. The container can also be flexible, like for example a pouch or a container made from a film or sheet. The container can be a monolayer container or a multilayer container. The container can be made of any material.

For practising the invention, a large number of catalysts that are known to catalyze the reaction of hydrogen with oxygen can be used, including many transition metals, metal borides (such as nickel boride), metal carbides (such as titanium carbide), metal nitrides (such as titanium nitride), and transition metal salts and complexes. Group VIII metals are particularly efficacious. Of the Group VIII metals, palladium and platinum are especially preferred because of their low toxicity and extreme efficiency in catalyzing the conversion of hydrogen and oxygen to water with little or no byproduct formation. The catalyst is preferably a redox catalyst.

The catalyst can be positioned inside the container, and/ or can be positioned inside a closure for hermetically closing the container, for example in a liner, and/or can be part of the material constituting the container.

### Short description of the drawings

Other characteristics and advantages of the invention will appear more clearly on reading the following detailed description which is made by way of non-exhaustive and non-limiting example, and with reference to the accompanying drawings, in which:
- Figures 1 to 4 are graphs showing O₂ concentration (%) over time in the headspace respectively of the bottles of comparative examples 1, comparative example 2, example 1 and example 2.
- Figures 5 to 8 are graphs showing the O₂ dissolved concentration over time in the water stored in respectively the bottles of comparative examples 1, comparative example 2, example 1 and example 2.
- Figure 9 is a tertiary diagram for hydrogen, oxygen and nitrogen, with flammability envelope for ambient conditions.

### Detailed description of the invention

The following detailed description is focused on the testing of different packaging method using rigid bottles for storing water and closed by an add-on closure. Nevertheless, it must be underlined that the scope of the invention is not limited to this particular type of container, but can be extended to any receptacle that can be used for storing a substance and that can be hermetically closed once the flushing step has been performed. Within the scope of the invention, the substance can be any oxygen-sensitive substance that can be altered by oxygen, such as for example wine, beer, fruit juice, sauces, soft drinks, medical substances, etc...

### Experimental tests

### Comparative example 1

A 200ml glass bottle is filled with tap water (water saturated with O₂). After filling, the headspace (residual internal space between the top level of the water and the top opening of the bottle) is not more than 30ml, and is about 20ml.

The bottle is then put in a chamber that is continuously supplied with a de-oxygenating gas containing 94.5%N₂ and 5.5 %H₂ by volume, until the concentration of oxygen in the head space is less than 1%.

A 2cm² "palladium wad" is glued in the headspace. A "palladium wad" "is a piece of nonwoven substrate onto which finely divided elemental Palladium is anchored.

The bottle is then hermetically closed with a metallic crown cork. The headspace of the closed bottle contains about 0.7%O₂, 93.8%N₂ and 5.5%H₂.

### Comparative example 2

A 330ml PET bottle is filled with de-aerated water (less than 300ppb O₂). After filling, the headspace (residual internal space between the top level of the water and the top opening of the bottle) is about 30ml.

The bottle is then put in a chamber that is continuously supplied with a de-oxygenating gas containing 94.5%N₂ and 5.5%H₂ by volume, until the concentration of oxygen in the bottle headspace is about 0.5%.

A 2cm² "palladium wad" (same as comparative example 1) is glued in the headspace.

The bottle is then hermetically closed with an aluminium seal. The headspace of the closed bottle contains about 0.5% O₂, 94.0%N₂ and 5.5%H₂ by volume.

### Example 1

A 330ml PET bottle is filled with de-aerated water (less than 300ppb O₂). After filling, the headspace (residual internal space between the top level of the water and the top opening of the bottle) is not more than about 30ml, and is about 10ml to 15 ml.

A 2cm² "palladium wads" (same as comparative example 1) is glued in the headspace.

A metal screw cap with valve system is mounted on the bottle, the bottle being hermitically closed by the valve system. The valve system is used for evacuating the air contained in the bottle headspace, until bottle is being completely filled by the water (no more headspace containing air).

The valve system is used for introducing in the bottle a de-oxygenating gas that is containing not less than 99.9% H₂.

The headspace of the closed bottle is equal to the initial headspace volume and contains not less than 99.5% H₂ and 0.5% O₂.

### Example 2

A 330ml bottle made from a PET copolymer (PET commercialized under reference "Wellman Ti818") mixed with about 2ppm palladium is filled with de-aerated water (less than 300ppb O₂). After filling, the headspace (residual internal space between the top level of the water and the top opening of the bottle) is not more than about 30ml, and is about 10ml to 15 ml.

A metal screw cap with valve system is mounted on the bottle, the bottle being hermitically closed by the valve system. The valve system is used for evacuating the air contained in the bottle headspace, until bottle is being completely filled by the water (no more headspace containing air).

The valve system is used for introducing in the bottle a de-oxygenating gas that is containing not less than 99.9% H₂.

The headspace of the closed bottle is equal to the initial headspace volume and contains not less than 99.5% H₂ and 0.5% O₂.

### Bottle testing

### OxySense® test- O₂ ingress (%) in headspace

The O₂ ingress (%) at 22°C in the headspace of the bottles of comparative examples 1 and 2 and in the headspace of the bottles of Examples 1 and 2 has been measured by using the well-known non invasive OxySense® test.

The testing apparatus is OxySense® instrument 210T.

One Oxy₂Dot® has been attached inside the bottle in the bottle headspace prior to filling the bottle with water.

To make the measurements, the fibre optic pen of the OxySense® instrument is aligned with the Oxy₂Dot® (from the outside of the bottle) making sure that the tip of the pen is almost making contact with bottle. The signal level on the OxySense® software is adjusted by using the up/down arrows. Then the capture button is pressed to obtain the oxygen concentration in the bottle headspace. The oxygen concentration is measured repeatedly over time.

### OxySense® test- dissolved O₂ concentration (ppm)

The dissolved O₂ concentration at 22°C in the water contained in the bottles of comparative examples 1 and 2 and in the water contained in the bottles of Examples 1 and 2 has been also measured by using the well-known non invasive OxySense® test.

For making the measurement, one Oxy₂Dot® has been attached inside the bottle, prior to filling the bottle with water, and in such a way that after water filling, the Oxy₂Dot® is immerged in the water contained in the bottle.

The measurement of dissolved O₂ concentration in ppm in the water is performed with the same OxySense® instrument.

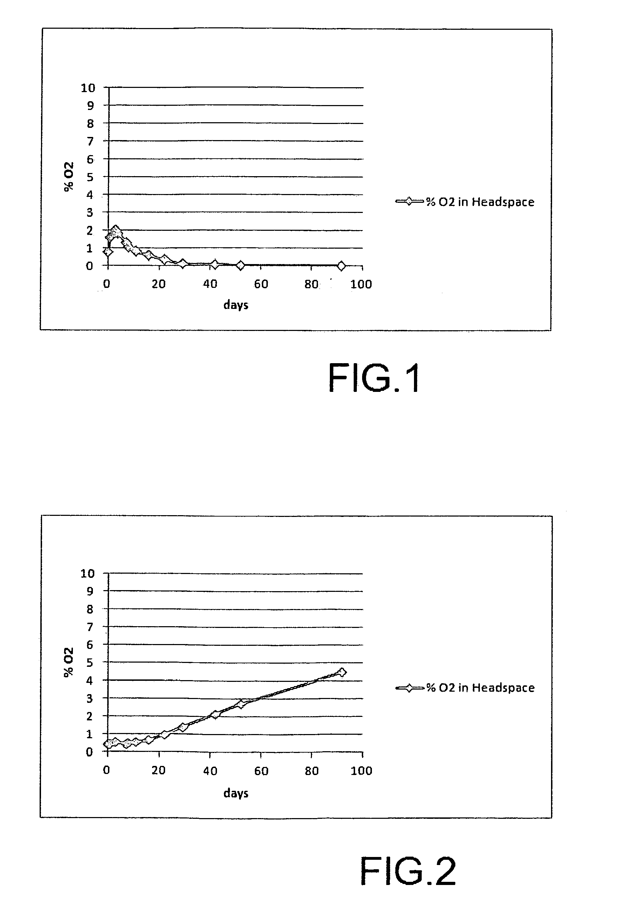

### Experimental Results- figures 1 to 8

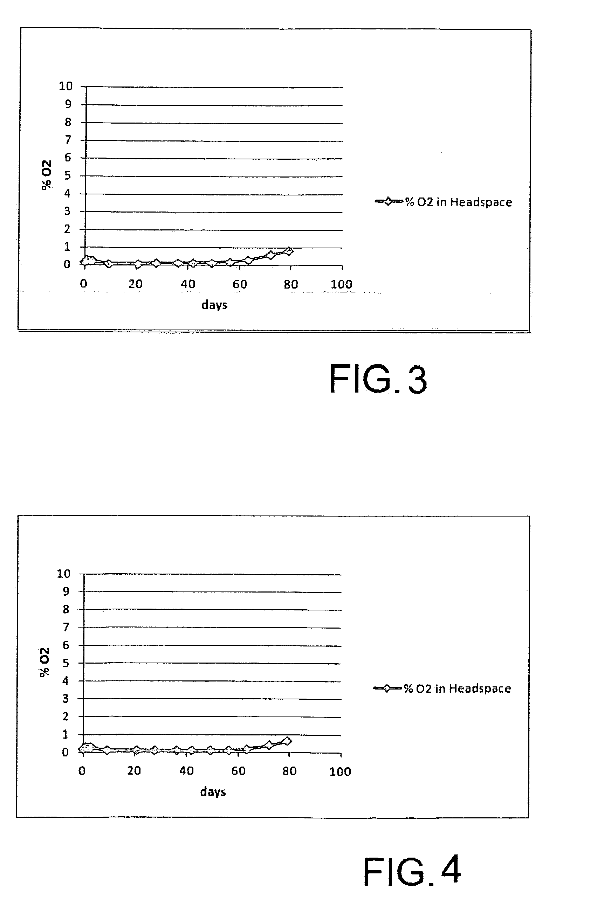

The results of O₂ ingress (%) measurements in headspace for the bottles of comparative examples 1 and 2 are shown respectively on the graphs of figures 1 and 2, and the results of O₂ ingress (%) measurements in headspace for the bottles of Examples 1 and 2 are shown respectively on the graphs of figures 3 and 4.

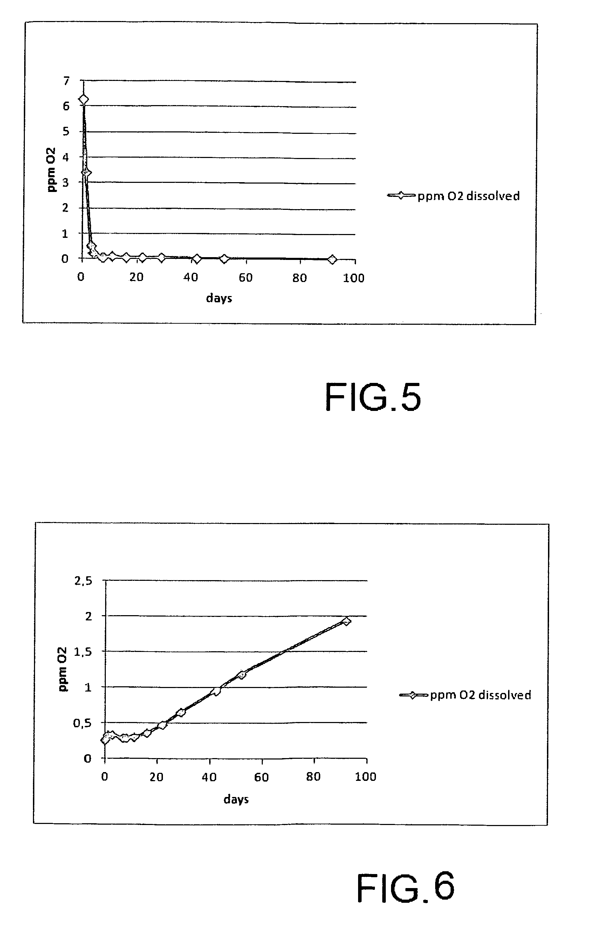

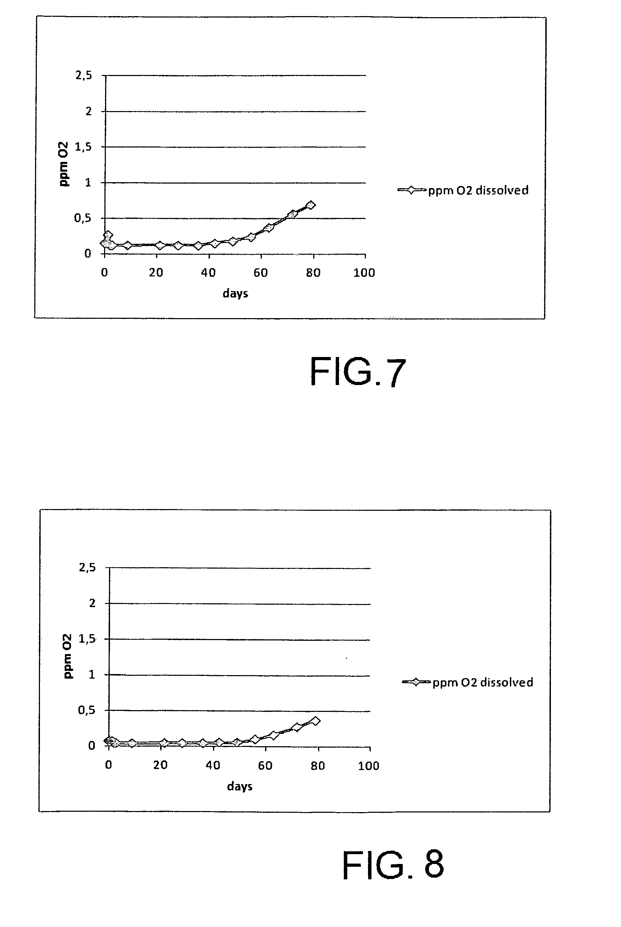

The results of dissolved O₂ concentration (ppm) for the bottles of comparative examples 1 and 2 are shown respectively on the graphs of figures 5 and 6, and the results of dissolved O₂ concentration (ppm) for the bottles of Examples 1 and 2 are shown respectively on the graphs of figures 7 and 8.

Figures 2 and 6 show that with a PET bottle having a wall permeable to oxygen the O₂ concentration in the headspace and the dissolved O₂ concentration are increasing rapidly after 20 days and the dissolved O₂ concentration is higher than 1 ppm after roughly 45 days. In contrast with a glass bottle (figures 1 and 5) that is impermeable to oxygen, the oxygen contained in the tap water and in the headspace is consumed rapidly. These comparative examples 1 and 2 demonstrate that the standard solution of flushing the bottle headspace with a gas containing 94.5%N₂ and 5.5%H₂ can be efficient for glass bottles that are not permeable to oxygen, but is not suitable in term of shelf life for PET bottles that are permeable to oxygen.

Figures 3, 4, 7 and 8 (bottle headspace with not less than 99.5%H₂) show that with a PET bottle having a wall permeable to oxygen the O₂ concentration in the headspace and the dissolved O₂ concentration are increasing only after 60 days, the dissolved O₂ concentration being still less than 1 ppm after 80 days. In comparison with comparative example 2 (figures 2 and 6), the shelf life has been dramatically increased. This increase of the shelf life is due to the consumption of the oxygen (O₂ scavenging) in a reaction with hydrogen for producing water, this reaction being catalyzed by the palladium.

One skilled in the art in the field of packaging knows that flushing a bottle headspace with a gas containing 94.5%N₂ and 5.5%H₂, like in the comparative examples 1 and 2, is safe in terms a flammability, and prior to the invention there was a prejudice for one skilled in the art in the field of packaging to mandatory practise low level of hydrogen, typically not more than about 5.5% for safety reasons.

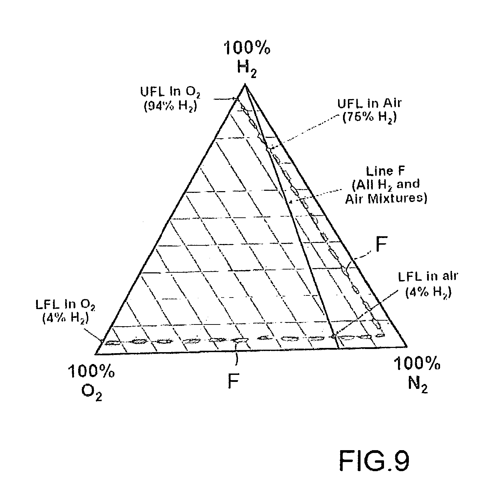

The graph of figure 9 is a tertiary diagram for hydrogen, oxygen and nitrogen, with flammability envelope (F) for ambient conditions in dotted line. Actually, this graph of figure 9 shows that there are actually two flammability limits: a lower flammability limit (LFL) of 4%H₂ in air and an upper flammability limit (UFL) in air of 75%, and that above this upper flammability limit (UFL) in air of 75%, the working conditions are outside the flammability envelope (F) and there is no risk of that the hydrogen becomes flammable in ambient condition.

It is thus the merit of the invention to have overcome the prejudice of the prior art to mandatory use low levels of hydrogen (not more than about 5.5%) and in contrast to use on the contrary very high level of hydrogen (not less than 75%) without prejudice for the flammability of hydrogen in ambient condition and with a strong improvement of the shelf life.

Although the use of a deoxygenating gas containing not less than 99.9% is H₂ is preferred, one can also practise the invention with a de-oxygenating gas contains at least 75% H₂, and more particularly at least 94% H₂.

In Examples 1 and 2, palladium has been used as catalyst for promoting the reaction between oxygen and hydrogen for producing water. The invention is however not limited to this particular catalyst, and can be practice with any other catalyst that promotes such a reaction. A large number of catalysts that are known to catalyze the reaction of hydrogen with oxygen can be used, including many transition metals, metal borides (such as nickel boride), metal carbides (such as titanium carbide), metal nitrides (such as titanium nitride), and transition metal salts and complexes. Group VIII metals are particularly efficacious. Of the Group VIII metals, palladium and platinum are especially preferred because of their low toxicity and extreme efficiency in catalyzing the conversion of hydrogen and oxygen to water with little or no byproduct formation. The catalyst is preferably a redox catalyst.

The catalyst can be positioned inside the container like in example 1, and/or can be part of the material constituting the container like in example 2 and/ or can be positioned inside a closure for hermetically closing the container, for example in a liner.

## Claims

1. A method for packaging an oxygen-sensitive substance into a container, said method comprising the following steps :
- the oxygen-sensitive substance is introduced into the container,
- a de-oxygenating gas containing at least 75% of molecular hydrogen is introduced inside the container containing the oxygen-sensitive substance,
- the container containing the oxygen-sensitive substance and the de-oxygenating gas is hermetically closed with a closure,
and wherein a catalyst is used inside the container and/or in the container wall and/or in the closure for promoting a reaction between molecular hydrogen and molecular oxygen.

2. The method of claim 1, wherein the closed container containing the oxygen-sensitive substance comprises an internal residual space free from oxygen-sensitive substance and filled with the de-oxygenating gas, said residual space having a volume of not more than 100ml, and more preferably of not more than 30ml.

3. The method of claim 1 or 2, wherein the container is permeable to oxygen.

4. The method of claim 3, wherein the container is made of a polymeric material.

5. The method of any one of claims 1 to 4, wherein the de-oxygenating gas is a mixture of an inert gas and molecular hydrogen.

6. The method of claim 5, wherein the inert gas is nitrogen.

7. The method of any one of claims 1 to 6, wherein the de-oxygenating gas is containing at least 94% of molecular hydrogen.

8. The method of any one of claims 1 to 4, wherein the de-oxygenating gas is containing not less than 99% of molecular hydrogen, and preferably 100% of molecular hydrogen.

9. The method of any one of claims 1 to 8, wherein the catalyst is a redox catalyst.

10. The method of any one of claims 1 to 8, wherein the catalyst is a metal of the Group VIII.

11. The method of any one of claims 1 to 8, wherein the catalyst is palladium or platinum.

12. A packaging comprising a container that is closed by a closure and that is containing an oxygen-sensitive substance and a de-oxygenating gas containing at least from 75% of molecular hydrogen, said packaging also comprising a catalyst inside the container and/or in the container wall and/or in the closure for promoting a reaction between molecular hydrogen and molecular oxygen.

13. The packaging of claim 12, wherein the closed container containing the oxygen-sensitive substance comprises an internal residual space free from oxygen-sensitive substance and filled with the de-oxygenating gas, said residual space having a volume of not more than 100ml, and more preferably of not more than 30ml.

14. The packaging of claim 12 or 13, wherein the container is permeable to oxygen.

15. The packaging of claim 14, wherein the container is made of a polymeric material.

16. The packaging of any one of claims 12 to 15, wherein the de-oxygenating gas is a mixture of an inert gas and molecular hydrogen.

17. The packaging of claim 16, wherein the inert gas is nitrogen.

18. The packaging of any one of claims 12 to 17, wherein the de-oxygenating gas is containing at least 94% of molecular hydrogen.

19. The packaging of any one of claims 12 to 15, wherein the de-oxygenating gas is containing not less than 99% of molecular hydrogen, and preferably 100% of molecular hydrogen.

20. The packaging of any one of claims 12 to 19, wherein the catalyst is a redox catalyst.

21. The packaging of any one of claims 12 to 20, wherein the catalyst is a metal of the Group VIII.

22. The packaging of any one of claims 12 to 20, wherein the catalyst is palladium or platinum.

23. The method of any one of claims 1 to 11 or the packaging of any one of claims 12 to 22, wherein the oxygen sensitive substantive is selected from the group : food product, beverage, medical substance.

## Patentansprüche

1. Verfahren zum Verpacken einer sauerstoffempfindlichen Substanz in einem Behälter (Container), wobei das Verfahren die folgenden Schritte aufweist:
- die sauerstoffempfindliche Substanz wird in den Container eingebracht,
- ein gegen Oxidation wirkendes Gas mit zumindest 75 % von molekularem Wasserstoff wird in den Container eingebracht, der die sauerstoffempfindliche Substanz enthält,
- der Container, der die sauerstoffempfindliche Substanz und das gegen Oxidation (de-oxygenating) wirkende Gas enthält, wird hermetisch mit einem Verschluss verschlossen,
und wobei ein Katalysator innerhalb des Containers und/oder in der Containerwand und/oder in dem Verschluss zur Veranlassung oder zum Fördern einer Reaktion zwischen dem molekularen Wasserstoff und dem molekularen Sauerstoff verwendet wird.

2. Verfahren nach Anspruch 1, wobei der verschlossene Container die sauerstoffempfindliche Substanz enthält und einen internen Restraum besitzt, der frei von sauerstoffempfindlicher Substanz ist und mit dem gegen Oxidierung wirkenden Gas gefüllt ist, wobei der Restraum ein Volumen von nicht mehr als 100 ml und speziell nicht mehr als 30 ml aufweist.

3. Verfahren nach Anspruch 1 oder 2, wobei der Container für Sauerstoff durchlässig ist.

4. Verfahren nach Anspruch 3, wobei der Container aus einem Polymermaterial entstanden ist.

5. Verfahren nach einem der Ansprüche 1 bis 4, wobei das der Oxidation entgegenwirkende Gas eine Mischung aus einem inerten Gas und einem molekularen Wasserstoff ist.

6. Verfahren nach Anspruch 5, wobei das inerte Gas Stickstoff ist.

7. Verfahren nach einem der Ansprüche 1 bis 6, wobei das gegen Oxidation wirkende Gas zumindest 94 % molekularen Wasserstoff enthält.

8. Verfahren nach einem der Ansprüche 1 bis 4, wobei das gegen Oxidation wirkende Gas nicht weniger als 99 % molekularen Wasserstoff enthält und bevorzugt 100 % molekularen Wasserstoff aufweist.

9. Verfahren nach einem der Ansprüche 1 bis 8, wobei der Katalysator ein Redox-Katalysator ist.

10. Verfahren nach einem der Ansprüche 1 bis 8, wobei der Katalysator ein Metall der Gruppe VIII ist.

11. Verfahren nach einem der Ansprüche 1 bis 8, wobei der Katalysator Palladium oder Platin ist.

12. Verpackung, mit einem Container, der von einem Verschluss verschlossen ist und der eine sauerstoffempfindliche Substanz enthält und ein der Oxidation entgegenwirkendes Gas enthält, welches zumindest 75 % molekularen Wasserstoff enthält, wobei die Verpackung auch einen Katalysator in dem Container und/oder in der Containerwand und/oder in dem Verschluss enthält, zur Veranlassung oder Förderung einer Reaktion zwischen dem molekularen Wasserstoff und dem molekularen Sauerstoff.

13. Verpackung nach Anspruch 12, wobei der verschlossene Container mit der sauerstoffempfindlichen Substanz ein internes Restvolumen aufweist, welches von sauerstoffempfindlicher Substanz frei ist und mit dem gegen Oxidation wirkenden Gas gefüllt ist, wobei das Restvolumen eine Größe von nicht mehr als 100 ml und bevorzugt nicht mehr als 30 ml besitzt.

14. Verpackung nach Anspruch 12 oder 13, wobei der Container für Sauerstoff durchlässig ist.

15. Verpackung nach Anspruch 14, wobei der Container aus einem Polymermaterial hergestellt ist oder worden ist.

16. Verpackung nach einem der Ansprüche 12 bis 15, wobei das gegen Oxidation wirkende Gas eine Mischung aus inertem Gas und molekularem Wasserstoff ist.

17. Verbackung nach Anspruch 16, wobei das inerte Gas Stickstoff ist.

18. Verpackung nach einem der vorigen Ansprüche 12 bis 17, wobei das gegen Oxidation wirkende Gas zumindest 94 % molekularen Wasserstoff enthält.

19. Verpackung nach seinem der vorigen Ansprüche 12 bis 15, wobei das gegen Oxidation wirkende Gas nicht weniger als 99 % molekularen Wasserstoff enthält, bevorzugt aus 100 % molekularem Wasserstoff besteht.

20. Verpackung nach einem der vorigen Ansprüche 12 bis 19, wobei der Katalysator ein Redox-Katalysator ist.

21. Verpackung nach einem der Ansprüche 12 bis 20, wobei der Katalysator ein Metall der Gruppe VIII ist.

22. Verpackung nach einem der Ansprüche 12 bis 20, wobei der Katalysator Palladium oder Platin ist.

23. Verfahren nach einem der Ansprüche 1 bis 11, oder die Verpackung nach einem der Ansprüche 12 bis 22, wobei die sauerstoffempfindliche Substanz ausgewählt ist aus der Gruppe: Lebensmittel (food), Getränk (beverage), medizinische Substanz (medical substance).

## Revendications

1. Procédé d'emballage d'une substance sensible à l'oxygène dans un récipient, ledit procédé comprenant les étapes suivantes:
- la substance sensible à l'oxygène est introduite dans le récipient;
- un gaz désoxygénant contenant au moins 75 % d'hydrogène moléculaire est introduit à l'intérieur du récipient contenant la substance sensible à l'oxygène;
- le récipient contenant la substance sensible à l'oxygène et le gaz désoxygénant est fermé hermétiquement par un élément de fermeture,
et dans lequel un catalyseur est utilisé à l'intérieur du récipient et/ou dans la paroi du récipient et/ou dans l'élément de fermeture dans le but de favoriser une réaction entre l'hydrogène moléculaire et l'oxygène moléculaire.

2. Procédé selon la revendication 1, dans lequel le récipient fermé contenant la substance sensible à l'oxygène comprend un espace intérieur résiduel exempt de substance sensible à l'oxygène et rempli du gaz désoxygénant, ledit espace résiduel présentant un volume non supérieur à 100 ml, et mieux encore non supérieur à 30 ml.

3. Procédé selon la revendication 1 ou 2, dans lequel le récipient est perméable à l'oxygène.

4. Procédé selon la revendication 3, dans lequel le récipient est constitué d'un matériau polymère.

5. Procédé selon l'une quelconque des revendications 1 à 4, dans lequel le gaz désoxygénant est un mélange d'un gaz inerte et d'hydrogène moléculaire.

6. Procédé selon la revendication 5, dans lequel le gaz inerte est l'azote.

7. Procédé selon l'une quelconque des revendications 1 à 6, dans lequel le gaz désoxygénant contient au moins 94 % d'hydrogène moléculaire.

8. Procédé selon l'une quelconque des revendications 1 à 4, dans lequel le gaz désoxygénant contient pas moins de 99 % d'hydrogène moléculaire, et de préférence 100 % d'hydrogène moléculaire.

9. Procédé selon l'une quelconque des revendications 1 à 8, dans lequel le catalyseur est un catalyseur d'oxydoréduction.

10. Procédé selon l'une quelconque des revendications 1 à 8, dans lequel le catalyseur est un métal appartenant au groupe VIII.

11. Procédé selon l'une quelconque des revendications 1 à 8, dans lequel le catalyseur est le palladium ou le platine.

12. Emballage comprenant un récipient qui est fermé par un élément de fermeture et qui contient une substance sensible à l'oxygène et un gaz désoxygénant contenant au moins à partir de 75 % d'hydrogène moléculaire, ledit emballage comprenant également un catalyseur à l'intérieur du récipient et/ou dans la paroi du récipient et/ou dans l'élément de fermeture ayant pour but de favoriser une réaction entre l'hydrogène moléculaire et l'oxygène moléculaire.

13. Emballage selon la revendication 12, dans lequel le récipient fermé contenant la substance sensible à l'oxygène comprend un espace intérieur résiduel exempt de substance sensible à l'oxygène et rempli du gaz désoxygénant, ledit espace résiduel présentant un volume non supérieur à 100 ml, et mieux encore non supérieur à 30 ml.

14. Emballage selon la revendication 12 ou 13, dans lequel le récipient est perméable à l'oxygène.

15. Emballage selon la revendication 14, dans lequel le récipient est constitué d'un matériau polymère.

16. Emballage selon l'une quelconque des revendications 12 à 15, dans lequel le gaz désoxygénant est un mélange d'un gaz inerte et d'hydrogène moléculaire.

17. Emballage selon la revendication 16, dans lequel le gaz inerte est l'azote.

18. Emballage selon l'une quelconque des revendications 12 à 17, dans lequel le gaz désoxygénant contient au moins 94 % d'hydrogène moléculaire.

19. Emballage selon l'une quelconque des revendications 12 à 15, dans lequel le gaz désoxygénant contient pas moins de 99 % d'hydrogène moléculaire, et de préférence 100 % d'hydrogène moléculaire.

20. Emballage selon l'une quelconque des revendications 12 à 19, dans lequel le catalyseur est un catalyseur d'oxydoréduction.

21. Emballage selon l'une quelconque des revendications 12 à 20, dans lequel le catalyseur est un métal appartenant au groupe VIII.

22. Emballage selon l'une quelconque des revendications 12 à 20, dans lequel le catalyseur est le palladium ou le platine.

23. Procédé selon l'une quelconque des revendications 1 à 11 ou emballage selon l'une quelconque des revendications 12 à 22, dans lequel la substance sensible à l'oxygène est sélectionnée dans le groupe comprenant un produit alimentaire, une boisson, une substance médicale.
